# EUROPÄISCHE PATENTANMELDUNG

(11) **EP 3 193 151 A1**
(43) Veröffentlichungstag der Anmeldung: **19.07.2017**
(21) Anmeldenummer: 16000059.2
(22) Anmeldetag: 12.01.2016
(51) Int. Cl.: G01M 5/00, G01M 11/08

(54) **ÜBERWACHUNG DES KALTRECKENS EINES DRUCKBEHÄLTERS MITTELS LICHTWELLENLEITERBASIERTER DEHNUNGSMESSUNG**

(71) Anmelder: Linde Aktiengesellschaft, 80331 München (DE)
(72) Erfinder: Flüggen, Rainer, 83673 Bichl (DE); Bichlmeier, Jürgen, 83342 Tacherting (DE); Hoffmann, Rainer, 82008 Unterhaching (DE)
(74) Vertreter: Meilinger, Claudia Sabine

(57) **Zusammenfassung**

Die Erfindung betrifft ein Verfahren zur Überwachung des Kaltreckens eines Druckbehälters, aufweisend das Anbringen zumindest eines Lichtwellenleiters (21,22) an einer Außenwand (11) des Druckbehälters (1), das Bereitstellen eines Innendrucks im Innenraum des Druckbehälters (1), das Einkoppeln von Licht in den mindestens einen Lichtwellenleiter (21,22), so dass Licht in dem mindestens einen Lichtwellenleiter (21,22) zurückgestreut wird und die Messung einer Vielzahl von Ausdehnungen des Druckbehälters (1) an einer Vielzahl von Punkten an der Außenwand (11) mit Hilfe des zurückgestreuten Lichts während einer Messzeit.

## Beschreibung

Die Erfindung betrifft ein Verfahren zur Überwachung des Kaltreckens eines Druckbehälters mittels lichtwellenleiterbasierter Dehnungsmessung.

Druckbehälter kommen in diversen technischen Gebieten zum Einsatz, insbesondere als Tanks zur Aufnahme von verflüssigten tiefsiedenden Gasen wie Stickstoff, verflüssigtem Erdgas, Sauerstoff oder Argon.

Material und Wandstärke derartiger Druckbehälter müssen einerseits aus Sicherheitsgründen so ausgelegt sein, dass der Druckbehälter einem höheren als dem vorgesehenen Betriebsdruck standhält, andererseits sollte die Wandstärke so gering wie möglich gehalten werden, um Materialkosten zu sparen und ein möglichst geringes Gewicht des Druckbehälters zu erreichen.

Aus dem Stand der Technik ist als eine "Kaltrecken" bezeichnete Methode bekannt, bei der die Festigkeit von metallischen Werkstoffen, deren Streckgrenze einen ausreichenden Abstand zur Bruchgrenze aufweist, durch Zugspannung erhöht wird. Mittels dieser Methode kann insbesondere eine geringere Wandstärke bei gleichbleibender Festigkeit erreicht werden.

Eine entsprechende Methode zum Kaltrecken eines Druckbehälters ist in dem Dokument DE3603415A1 beschrieben. Bei dem beschriebenen Verfahren wird durch Einleiten einer Flüssigkeit in den Innenraum des Druckbehälters ein Innendruck erzeugt, wodurch sich insbesondere die Böden des Druckbehälters plastisch verformen.

Zur Überwachung eines derartigen Verfahrens ist eine Messung der Ausdehnung des Druckbehälters während der gesamten Zeit des Kaltreckens (bis zu vier Stunden) vorteilhaft. Hierdurch können insbesondere auftretende Fehlstellen des Materials erfasst werden.

Nach dem Stand der Technik wird die Ausdehnung des Druckbehälters während des Kaltreckens mittels an einzelnen Punkten der Behälteraußenwand angebrachten Dehnungsmessstreifen gemessen. Dies hat den Nachteil, dass eine große Zahl von Dehnungsmessstreifen aufgebracht, verkabelt und erfasst werden müssen, um eine ausreichend genaue Messung zu erhalten. Fehlstellen im Material, die sich zwischen zwei Dehnungsmessstreifen befinden, können dabei nicht erfasst werden.

Daher ergibt sich die Aufgabe, ein effektives, effizientes, kostengünstiges und automatisierbares Verfahren zur Überwachung des Kaltreckens eines Druckbehälters zur Verfügung zu stellen.

Diese Aufgabe wird durch den Gegenstand des unabhängigen Anspruchs 1 gelöst. Ausführungsformen des Verfahrens sind in den Unteransprüchen 2 bis 9 angegeben und werden im Folgenden genauer beschrieben.

Bei dem erfindungsgemäßen Verfahren zur Überwachung des Kaltreckens eines Druckbehälters wird an einer Außenwand des Druckbehälters zumindest ein Lichtwellenleiter angebracht, zum Kaltrecken des Druckbehälters ein Innendruck im Innenraum des Druckbehälters bereitgestellt, Licht, insbesondere Laserlicht, in den mindestens einen Lichtwellenleiter eingekoppelt, so dass Licht in dem mindestens einen Lichtwellenleiter zurückgestreut wird und eine Vielzahl von Ausdehnungen des Druckbehälters an einer Vielzahl von Punkten an der Außenwand mit Hilfe des zurückgestreuten Lichts, insbesondere mit Hilfe der optischen Weglänge des zurückgestreuten Lichts, während einer Messzeit gemessen.

Ein derartiger Druckbehälter kann insbesondere zur Aufnahme von verflüssigten Gasen wie z.B. Stickstoff, verflüssigtem Erdgas, Sauerstoff oder Argon bestimmt sein. Üblicherweise werden derartige Druckbehälter aus Metall gefertigt und weisen einen zumindest näherungsweise hohlzylinderförmigen Mantel, sowie zwei den Mantel abschließende Böden auf, wobei die Böden z.B. die Form von Kugelsegmenten aufweisen. Die Böden werden üblicherweise mit dem Mantel verschweißt, um einen druckdichten Innenraum zu erhalten.

Um den Materialbedarf bei gleichbleibender Druckstabilität zu verkleinern, werden solche Druckbehälter einem Kaltreckverfahren ausgesetzt, wobei sich insbesondere Mantel und Böden des Druckbehälters ausdehnen. Ein solches Kaltrecken wird beispielsweise durch Erzeugung eines Innendrucks in dem Druckbehälter mittels des Einleitens einer Flüssigkeit in den Innenraum des Druckbehälters erreicht. Gemäß der Erfindung kann dabei die Ausdehnung des Druckbehälters mittels Lichtwellenleitern erfasst werden, wobei die Mess- bzw. Überwachungszeit z.B. der Dauer des Kaltreckens entspricht.

Bei dem beschriebenen Verfahren können vorteilhafterweise Ausdehnungen entlang der Länge des gesamten Lichtwellenleiters mit einer Ortsauflösung von z.B. bis zu 2,5 mm erfasst werden. Dadurch lassen sich z.B. Materialfehlstellen viel zuverlässiger und genauer bestimmen als mit herkömmlichen Methoden. Zusätzlich lassen sich mit dem erfindungsgemäßen Verfahren auch Fehlstellen im Material ermitteln, welche sich durch Sprünge im Dehnungsprofil auszeichnen. Zudem sind mittels des erfindungsgemäßen Verfahrens Messwerte im Gegensatz zu herkömmlichen Verfahren einfach automatisch generierbar und auswertbar, insbesondere da durch die Erfassung von Signaländerungen statt Absolutwerten die Auswertung der Daten erleichtert wird.

Gemäß einer Ausführungsform der Erfindung wird der mindestens eine Lichtwellenleiter auf die Außenwand des Druckbehälters aufgeklebt, insbesondere mittels einer Klebspur, umfassend z.B. einen Zweikomponentenklebstoff.

Gemäß einer weiteren Ausführungsform der Erfindung weist der Druckbehälter einen entlang einer Achse erstreckten Mantel auf. Bei der Achse handelt es sich insbesondere um eine vertikale Längs- bzw. Zylinderachse des Mantels.

Gemäß einer weiteren Ausführungsform der Erfindung verläuft der mindestens eine Lichtwellenleiter zumindest abschnittsweise parallel zur Achse oder entlang der besagten Achse.

Gemäß einer weiteren Ausführungsform verläuft der mindestens eine Lichtwellenleiter zumindest abschnittsweise entlang einer Umfangsrichtung des Mantels, die senkrecht zu der besagten Achse des Mantels orientiert ist.

Gemäß einer weiteren Ausführungsform der Erfindung verläuft der mindestens eine Lichtwellenleiter zumindest abschnittsweise entlang (z.B. auf) einer Schweißnaht des Druckbehälters oder über eine Schweißnaht des Druckbehälters hinweg.

Gemäß einer weiteren Ausführungsform der Erfindung verläuft der mindestens eine Lichtwellenleiter an einem Stutzen des Druckbehälters entlang (z.B. auf dem Stutzen) oder über einen Stutzen des Druckbehälters hinweg, wobei der Stutzen insbesondere zum Anschließen einer Fluidleitung zum Einleiten eines Fluids in den Druckbehälter oder zum Abziehen eines Fluids aus dem Druckbehälter ausgebildet ist.

Durch Verlegen eines Lichtwellenleiters an Schweißnähten oder Stutzen kann vorteilhafterweise die Ausdehnung an Stellen überprüft werden, an denen besonders häufig Materialfehlstellen auftreten.

Gemäß einer weiteren Ausführungsform ist der mindestens eine Lichtwellenleiter helikal um den Mantel gewickelt.

Weiterhin kann das erfindungsgemäße Verfahren natürlich auch mehrere Lichtwellenleiter verwenden.

Gemäß einer weiteren Ausführungsform verläuft der mindestens eine Lichtwellenleiter entlang einer ersten Richtung (z.B. entlang der besagten Achse), wobei ein weiterer Lichtwellenleiter zur Messung einer Vielzahl von Ausdehnungen des Druckbehälters an der Außenwand angebracht wird, wobei der weitere Lichtwellenleiter entlang einer von der ersten Richtung verschiedenen zweiten Richtung verläuft (z.B. entlang der Umfangsrichtung).

Gemäß einer weiteren Ausführungsform ist der Druckbehälter während der Messung zumindest teilweise mit einer Flüssigkeit, insbesondere Wasser, gefüllt.

Dies hält vorteilhafterweise die Temperatur des Druckbehälters konstant, so dass mittels des oder der Lichtwellenleiter Ausdehnungen des Druckbehälters ohne temperaturbedingte Messfehler ermittelt werden können.

Gemäß einer weiteren Ausführungsform wird der Innendruck durch Einleiten einer Flüssigkeit, insbesondere Wasser, in den Druckbehälter erzeugt.

Hierbei kann die Flüssigkeit beispielsweise mittels einer Pumpe in den Druckbehälter gepumpt werden.

Gemäß einer weiteren Ausführungsform liegt der besagte Lichtwellenleiter in Form eines längserstreckten Elementes vor, das insbesondere durch eine Glasfaser gebildet ist bzw. solche aufweist. Es sind jedoch auch optische Fasern bzw. Lichtwellenleiter aus anderen Materialen denkbar.

Der oder die Lichtwellenleiter sind insbesondere mit einer Messeinrichtung verbunden, die dazu eingerichtet ist, mittels des besagten Lichtwellenleiters eine Ausdehnung des Druckbehälters zu messen.

Die besagte Messeinrichtung ist hierzu insbesondere dazu ausgebildet, in den mindestens einen Lichtwellenleiter Licht (optische Signale) einzuleiten und in dem Lichtwellenleiter zurückgestreutes Licht in bekannter Weise auszuwerten. Hierbei wird ausgenutzt, dass die in den Lichtwellenleiter eingesandten und zurückgestreuten optischen Signale stark von der optischen Weglänge und damit von der Ausdehnung des Lichtwellenleiters abhängig sind. Zur Auswertung solcher optischen Signale des Lichtwellenleiters existieren mehrere Verfahrensweisen, die es erlauben, die Ausdehnung an einem beliebigen Punkt des Lichtwellenleiters mit ausreichend hoher Präzision, insbesondere bis zu 2,5 mm Ortauflösung bei Ausnutzung des Rayleigh-Effekts, zu bestimmen.

Gemäß einer weiteren Ausführungsform ist vorgesehen, dass die Bestimmung der Ausdehnung durch Auswertung der Rayleigh-Streuung erfolgt. Hierzu weist die Messeinrichtung insbesondere ein kohärentes Frequenzbereichsreflektometer (c-OFDR für coherent Optical Frequency Domain Reflectometer) auf, bei dem Licht eines durchstimmbaren Lasers in ein Mach-Zehnder-Interferometer eingekoppelt wird, das das Licht auf zwei Strecken aufteilt, wobei der Lichtwellenleiter die eine Strecke bildet und die andere Strecke eine Referenzstrecke bekannter Länge ist. Das Rayleigh-Streulicht aus dem Lichtwellenleiter wird mit dem Lichtanteil aus der Referenzstrecke überlagert und detektiert. Beim Durchstimmen der Laserwellenlänge entsteht dabei am Detektor ein periodisches Signal, dessen Frequenz vom jeweiligen Streuort des Lichtwellenleiters abhängt. Die einzelnen Frequenzen dieses Signals, die über eine Fourier-Transformation erhältlich sind, entsprechen somit den Streuorten in dem Lichtwellenleiter; die Amplitude jedes Frequenzanteils gibt die Intensität der jeweiligen Reflexion an. Hierbei lassen sich Ortsauflösungen von bis zu 2,5 mm erzielen.

Die Rayleigh-Strahlung in einem Lichtwellenleiter, wie z.B. einer Glasfaser, entsteht durch elastische Streuprozesse an lokalen Defekten/Störungen des Lichtwellenleiters. Wird eine solche Glasfaser mittels c-OFDR abgetastet, ergibt sich ein für die Glasfaser charakteristischer, fluktuierender Intensitätsverlauf der Rayleigh-Streuung entlang der Glasfaser, der bei einer Änderung der räumlichen Ausdehnung der Faser räumlich gestreckt bzw. gestaucht wird, wodurch die Ausdehnung entlang der Glasfaser berechnet werden kann. Die Messeinrichtung ist entsprechend insbesondere dazu konfiguriert das Signal entlang der Glasfaser in benachbarte Segmente (größer gleich 1 mm) zu zerlegen und das entsprechende Signal in den Frequenzraum zu transformieren. Für jedes Segment ergibt sich dabei ein fluktuierendes Reflexionsmuster in Abhängigkeit von der Frequenz. Änderungen der Dehnung der Glasfaser bedingen eine Frequenzverschiebung, die insbesondere proportional zur Ausdehnungsänderung der Glasfaser im jeweiligen Segment ist. Die Messeinrichtung ist entsprechend insbesondere dazu ausgebildet anhand der jeweiligen Frequenzverschiebung die (lokale) Ausdehnung der Glasfaser bzw. des Lichtwellenleiters zu ermitteln.

Gemäß einer weiteren Ausführungsform erfolgt die Ausdehnungsmessung über die Auswertung von optischen Signalen, wie sie durch Brillouin-Streuung des Lichtwellenleiters entstehen. In diesem Fall basiert die Ausdehnungsmessung auf der ortsaufgelösten Bestimmung der Referenzfrequenz zwischen der in den Lichtwellenleiter eingeleiteten, primären Lichtwelle und der durch die in Folge von Brillouin-Streuung im Lichtwellenleiter induzierten und zurückgestreuten Welle, welche in ihrer Frequenz in Abhängigkeit von der Ausdehnung gegenüber der Primärwelle verringert ist. Die Messeinrichtung ist daher insbesondere dazu ausgebildet, eine pulsförmige Primärlichtwelle in den Lichtwellenleiter einzuleiten und das rückgestreute Licht zeitaufgelöst für verschiedene Frequenzdifferenzen zu detektieren und unter Kenntnis der Pulslaufzeit die Frequenzverschiebung auf Grund der Ausdehnungsveränderung ortsaufgelöst zu bestimmen. Auch in dieser Ausgestaltung der Erfindung lässt sich also durch die Auswertung der (rückgestreuten) optischen Signale die Ausdehnung an jedem beliebigen Punkt des Lichtwellenleiters bestimmen.

In einer weiteren Ausführungsform ist vorgesehen, die Ausdehnungsmessung über die Auswertung von optischen Signalen, wie sie durch Streuung am Bragg-Gitter entstehen, durchzuführen. Bragg-Gitter sind in den Lichtwellenleiter eingeschriebene optische Bandfilter, welche nahezu beliebig oft im Lichtwellenleiter platziert werden können. Die Mittenwellenzahl des Bandstopps ergibt sich dabei aus der Bragg-Bedingung. Die spektrale Breite des Bandstopps hängt neben der Gitterlänge und der Brechzahl von der Ausdehnung ab. Die Messeinrichtung ist dann entsprechend dazu ausgebildet bei gegebener und über den Lichtwellenleiter verschiedener Gitterlänge und Brechzahl die Ausdehnung an der jeweiligen Stelle des Bragg-Gitters über die Breite des Bandstopps zu bestimmen.

Alternativen einzelner trennbarer hier als Ausführungsformen der Erfindung beschriebener Merkmale können frei kombiniert werden, um weitere Ausführungsformen der Erfindung zu erhalten.

Weitere Einzelheiten und Vorteile der Erfindung sollen durch die nachfolgende Figurenbeschreibung eines Ausführungsbeispiels anhand einer Figur erläutert werden. Es zeigt:

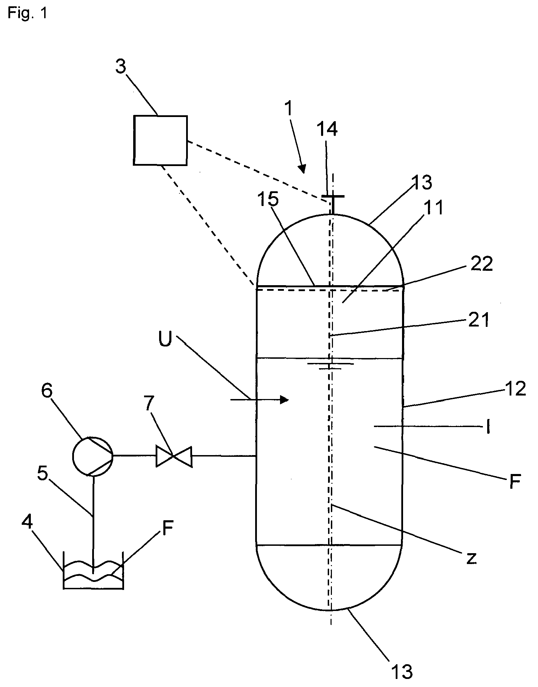

- Fig. 1: eine schematische Darstellung eines Druckbehälters während der Durchführung des erfindungsgemäßen Verfahrens.

Die Figur zeigt einen Druckbehälter 1 aufweisend einen hohlzylinderförmigen Mantel 12, der sich entlang einer z.B. vertikal erstreckten Achse z erstreckt und in einer Umfangsrichtung U umläuft. Der Druckbehälter 1 weist weiterhin zwei den Druckbehälter 1 nach oben und unten hin begrenzende Böden 13 auf, die insbesondere an den Stirnseiten des Mantels 12 angeordnet sind und insbesondere mit dem Mantel 12 verschweißt sind. Dabei sind die Böden 13 gewölbt ausgebildet, insbesondere tiefgewölbt, wobei insbesondere der Kugelradius des betreffenden Bodens gleich dem 0,8-fachen des Manteldurchmessers ist, oder insbesondere flachgewölbt, wobei insbesondere der betreffende Boden einen Kugelradius aufweist, der dem einfachen Manteldurchmesser des Mantels 12 entspricht.

An dem Druckbehälter 1 sind z.B. zwei als gestrichelte Linien dargestellte Lichtwellenleiter 21, 22, welche insbesondere jeweils eine Glasfaser aufweisen oder durch eine solche gebildet sind, angeordnet, insbesondere aufgeklebt. Dabei ist der erste Lichtwellenleiter 21 entlang der Achse z des Mantels 12 ausgerichtet. Der erste Lichtwellenleiter 21 verläuft insbesondere um den gesamten Druckbehälter 1 herum, so dass der erste Lichtwellenleiter 21 sowohl die Außenwand des Mantels 12 als auch die Außenwände beider Böden 13 berührt sowie insbesondere entlang eines Stutzens 14 des Druckbehälters 1 verläuft. Der zweite Lichtwellenleiter 22 ist z.B. entlang der Umfangsrichtung U des Mantels 12 ausgerichtet und ist insbesondere um den gesamten Druckbehälter 1 herum angeordnet, so dass der zweite Lichtwellenleiter 22 die Außenwand des Mantels 12 berührt, wobei er z.B. entlang oder auf einer Schweißnaht 15 verläuft oder diese kreuzt.

Alternativ zu der gezeigten Konfiguration können bei einem erfindungsgemäßen Verfahren auch lediglich ein Lichtwellenleiter oder mehr als zwei Lichtwellenleiter an dem Druckbehälter 1 angebracht werden. Auch können die Lichtwellenleiter in anderen als den gezeigten Positionierungen, beispielsweise schräg in Bezug auf die Achse z des Mantels 12 oder in Bezug auf die Umfangsrichtung U, an dem Druckbehälter 1 angebracht werden.

Beide Lichtwellenleiter 21, 22 sind mit einer Messeinrichtung 3 verbunden. Dabei ist die Messeinrichtung 3 insbesondere dazu ausgebildet, Lichtsignale, insbesondere Laserpulse, in die Lichtwellenleiter 21,22 einzukoppeln, so dass die Lichtsignale zurückgestreut werden, und mittels des zurückgestreuten Lichts in bekannter Weise die Ausdehnung des jeweiligen Lichtwellenleiters 21,22 zu ermitteln.

Die Figur zeigt weiterhin einen mit einer Flüssigkeit F, insbesondere Wasser, gefüllten Flüssigkeitsbehälter 4, welcher über eine Leitung 5 mit dem Druckbehälter 1 in Strömungsverbindung gebracht werden kann, so dass mittels einer Pumpe 6 das Innenvolumen bzw. der Innenraum I des Druckbehälters 1 mit der Flüssigkeit F gefüllt werden kann. Die Strömungsverbindung zwischen der Pumpe 6 und dem Druckbehälter 1 ist mittels des Ventils 7 verschließbar.

Mittels der Pumpe 6 kann insbesondere über die in dem Druckbehälter 1 befindliche Flüssigkeit F ein Innendruck in dem Druckbehälter 1 erzeugt werden, wodurch insbesondere ein Kaltrecken des Druckbehälters 1, also eine plastische Verformung des Mantels 12 und/ oder der Böden 13 des Druckbehälters hervorgerufen wird.

Die in dem Druckbehälter bzw. im Innenraum I 1 befindliche Flüssigkeit F dient insbesondere zusätzlich dazu, die Temperatur in dem Druckbehälter 1 konstant zu halten, so dass die Ausdehnung des Druckbehälters 1 mittels der Lichtwellenleiter 21, 22 ohne durch Temperaturschwankungen bedingte Messfehler erfasst werden kann.

**Bezugszeichenliste**

| | |
|---|---|
| 1 | Druckbehälter |
| 11 | Außenwand |
| 12 | Mantel |
| 13 | Boden |
| 14 | Stutzen |
| 15 | Schweißnaht |
| 21 | Erster Lichtwellenleiter |
| 22 | Zweiter Lichtwellenleiter |
| 3 | Messeinrichtung |
| 4 | Flüssigkeitsbehälter |
| 5 | Leitung |
| 6 | Pumpe |
| 7 | Ventil |
| F | Flüssigkeit |
| z | Achse |
| U | Umfangsrichtung |
| I | Innenraum |

## Patentansprüche

1. Verfahren zur Überwachung des Kaltreckens eines Druckbehälters (1), wobei das Verfahren die folgenden Schritte aufweist:
• Anbringen zumindest eines Lichtwellenleiters (21,22) an einer Außenwand (11) des Druckbehälters (1),
• Bereitstellen eines Innendrucks in einem Innenraum (I) des Druckbehälters (1) zum Kaltrecken des Druckbehälters (1),
• Einkoppeln von Licht in den mindestens einen Lichtwellenleiter (21,22), so dass Licht im mindestens einen Lichtwellenleiter (21,22) zurückgestreut wird,
• Messung einer Vielzahl von Ausdehnungen des Druckbehälters (1) an einer Vielzahl von Punkten an der Außenwand (11) mit Hilfe des zurückgestreuten Lichts während einer Messzeit.

2. Verfahren nach Anspruch 1, wobei der mindestens eine Lichtwellenleiter (21,22) auf die Außenwand (11) des Druckbehälters (1) aufgeklebt wird.

3. Verfahren nach einem der vorangegangenen Ansprüche, wobei der Druckbehälter (1) einen entlang einer Achse (z) erstreckten Mantel (12) aufweist.

4. Verfahren nach Anspruch 3, wobei der mindestens eine Lichtwellenleiter (21,22) zumindest abschnittsweise parallel zur Achse (z) oder entlang der Achse (z) verläuft, und/oder wobei der mindestens eine Lichtwellenleiter (21,22) zumindest abschnittsweise entlang einer Umfangsrichtung (U) des Mantels (12) verläuft.

5. Verfahren nach einem der vorangegangenen Ansprüche, wobei der mindestens eine Lichtwellenleiter (21,22) helikal um den Mantel (12) gewickelt ist.

6. Verfahren nach einem der vorangegangenen Ansprüche, wobei der mindestens eine Lichtwellenleiter (21) entlang einer ersten Richtung (z) verläuft, und wobei ein weiterer Lichtwellenleiter (22) zur Messung einer Vielzahl von Ausdehnungen des Druckbehälters (1) an der Außenwand (11) angebracht wird, wobei der weitere Lichtwellenleiter (22) entlang einer von der ersten Richtung (z) verschiedenen zweiten Richtung (U) verläuft.

7. Verfahren nach einem der vorhergehenden Ansprüche, wobei der mindestens eine Lichtwellenleiter (22) zumindest abschnittweise entlang einer Schweißnaht (15), auf einer Schweißnaht (15) und/oder über eine Schweißnaht (15) hinweg verläuft, und/oder wobei der mindestens eine Lichtwellenleiter (21) zumindest abschnittsweise entlang eines Stutzens (14), auf einem Stutzen (14) und/oder über einen Stutzen (14) hinweg verläuft.

8. Verfahren nach einem der vorangegangenen Ansprüche, wobei der Innenraum (I) des Druckbehälters (1) während der Messung zumindest teilweise mit einer Flüssigkeit (F), insbesondere Wasser, gefüllt ist.

9. Verfahren nach einem der vorangegangenen Ansprüche, wobei der Innendruck durch Einleiten einer Flüssigkeit (F) in den Innenraum (I) des Druckbehälters (1) erzeugt wird.
